# FASCICULE DE BREVET EUROPEEN

(11) **EP 0 893 205 B1**
(45) Date de publication et mention de la délivrance du brevet: **04.02.2004**
(21) Numéro de dépôt: 98401396.1
(22) Date de dépôt: 10.06.1998
(51) Int. Cl.: B25C 1/18, B25C 1/00

(54) **Bande de bagues de réception de tampon de scellement pour appareil de scellement de tampon**
Ringstreifen zum Halten von Befestigungsdübeln und Setzgerät dafür
Washer strip carrying fasteners and fastener-driving tool

(30) Priorité: 25.07.1997 FR 9709493
(43) Date de publication de la demande: 27.01.1999
(73) Titulaire: SOCIETE DE PROSPECTION ET D'INVENTIONS TECHNIQUES SPIT, 26501 Bourg-Les-Valence Cédex (FR)
(72) Inventeur: Almeras, Roland, 07300 Tournon (FR); Herelier, Patrick, Saint Jean de Muzols 07300 Tournon (FR)
(74) Mandataire: Bloch, Gérard

(56) Documents cités:
- DE-A- 2 314 920
- FR-A- 2 111 359
- FR-A- 2 158 865
- FR-A- 2 628 021

## Description

Le domaine de l'invention est celui du scellement de tampon au moyen d'un appareil de scellement avec masselotte d'entraînement des tampons, propulsée par le gaz de combustion de charges de poudre, et chargeur de tampons, lié au canon et au guide-tampon de l'appareil.

De tels appareils pour usage de bandes de tampons à introduire dans le chargeur et comprenant une pluralité de bagues de réception de tampon reliées entre elles par de fragiles cloisons de liaison destinées à être sectionnées, les bagues de réception, quant à elles, étant détruites lors des scellements.

On connaît de telles bandes de tampons, notamment par les documents EP-A 0 237 476 et EP-A 0 237 477. Après leur mise en place dans le chargeur, elles sont, après chaque tir, déplacées d'un pas - de bague et de cloison de liaison - par un coulisseau.

Après introduction d'un tampon, et de sa bague de réception, dans le guide-tampon, l'ensemble y reste correctement maintenu, c'est-à-dire avec l'axe du tampon confondu avec celui du guide-tampon, grâce aux bagues de réception adjacentes ou même à la dernière bague pour ce qui concerne l'avant-dernière. Ainsi, les tampons sont correctement guidés, sans déviation, lors de leur propulsion par la masselotte. Il n'en est pas de même pour le dernier tampon dont la bague de réception n'est plus reliée à d'autres. Son guidage dans le guide-tampon risque donc d'être défectueux.

La présente invention vise tout d'abord à éliminer ce risque.

A cet effet, l'invention concerne un ensemble d'un chargeur d'appareil de scellement et d'une bande de bagues de réception des tampons de scellement conforme aux caractéristiques de la revendication 1.

L'invention a également pour objet une bande de bagues de réception des tampons de scellement. Celle-ci est conforme aux caractéristiques des revendications 5 à 8.

EP 0 835 726 décrit une bande de bagues de réception de tampon pourvu d'un organe de maintien et de guidage mais ne comprend pas de moyen solidaire d'un organe de poussée du chargeur de l'appareil de scellement.

FR 2 158 865 décrit une bande de bagues avec un organe de guidage solidaire d'une bague d'extrémité mais également non solidaire d'un organe de poussée.

L'invention sera mieux comprise à l'aide de la description suivante d'une forme de réalisation particulière de la bande de bagues de réception de tampon en référence au dessin annexé sur lequel :

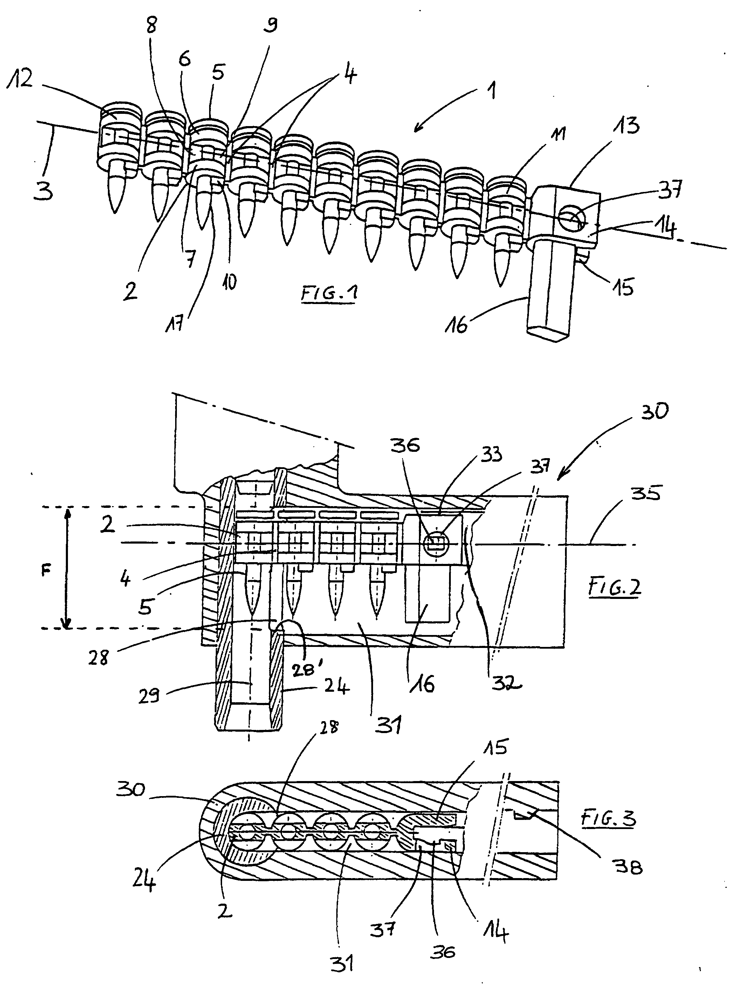

- la figure 1 représente une vue en perspective de la bande de bagues de la forme de réalisation particulière de l'invention.
- la figure 2 représente une vue en coupe partielle axiale d'un chargeur contenant la bande de tampons de la figure 1, d'un appareil de scellement au repos;
- la figure 3 représente une vue en coupe partielle le long de la ligne III-III du chargeur de la figure 2;
- la figure 4 représente une vue en coupe partielle axiale du chargeur de la figure 2, lors de la mise en appui de l'appareil de scellement;

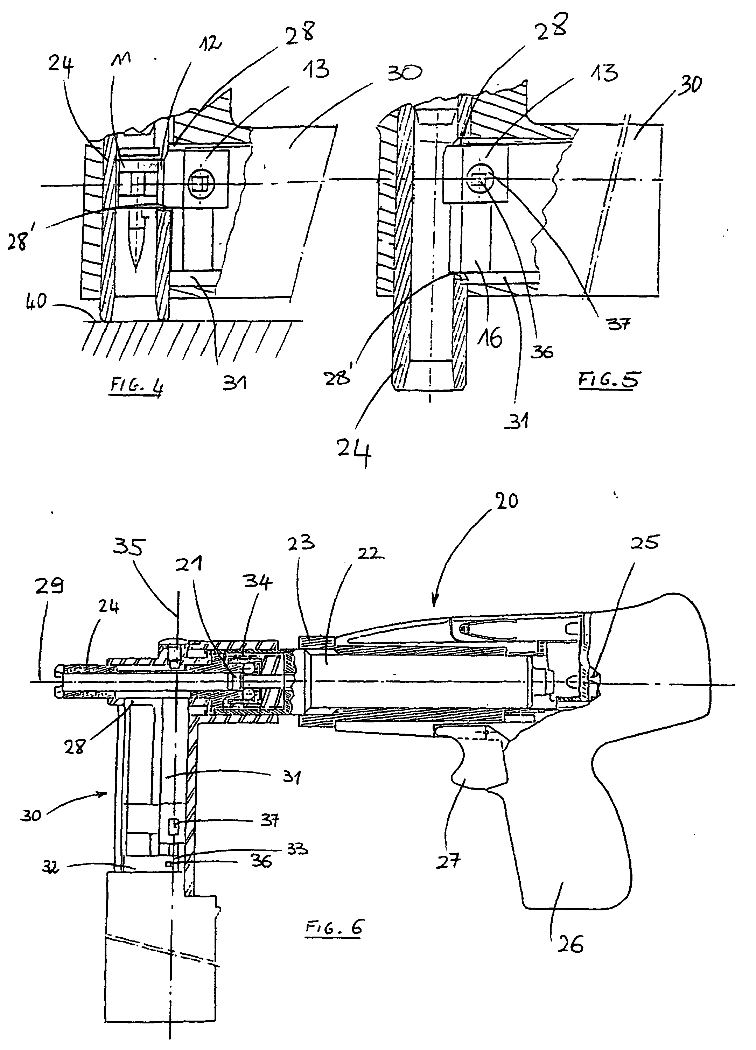

- la figure 5 représente une vue en coupe axiale du chargeur de la figure 2, après usage du dernier tampon de la bande de tampons et
- la figure 6 représente une vue en coupe axiale de l'appareil de scellement du chargeur de la figure 2.

La bande de tampons 1 est destinée à alimenter un appareil 20 de scellement de tampons avec masselotte 21 d'entraînement des tampons, propulsée par le gaz de combustion de charges de poudre.

L'appareil de scellement de tampons comprend un canon 22 monté coulissant dans un porte-canon 23 et solidaire en translation axiale d'un guide-tampon avant 24 dans lequel peut coulisser la masselotte 21 d'entraînement des tampons, un dispositif arrière 25 de mise à feu des charges de poudre et une poignée 26 pourvue d'un gâchette 27 de commande du dispositif de mise à feu 25.

Le guide-tampon 24 pourvu d'une lumière 28 d'approvisionnement de tampon constituée d'une fente parallèle à l'axe 29 du guide-tampon 24, de longueur axiale F et de largeur égale au diamètre extérieur de bagues de réception de tampon décrites par la suite.

L'appareil 20 de scellement de tampons comprend en outre un chargeur 30, monté sur le guide-tampon 24, comportant un magasin 31 de réception de la bande de tampons 1 et une porte d'introduction et d'éjection de la bande 1. Le guide-tampon 24 et le canon 22 peuvent légèrement coulisser vers l'arrière par rapport au chargeur contre l'action de ressorts de rappel 34.

Le magasin 31 de réception de la bande de tampons 1 s'étend le long d'un axe longitudinal 35 perpendiculaire à l'axe 29 du guide tampon 24 et est ouvert au droit de la lumière 28 d'approvisionnement de tampon pour le passage des tampons. L'intérieur du magasin d'alimentation 31 contient un organe 32 de poussée de la bande 1, pourvu d'un doigt de poussée 33, et un ergot d'éjection 38 faisant saillie d'une paroi intérieure du magasin 31. L'organe de poussée 32 est monté sur un ressort de poussée, non représenté, s'étendant le long de l'axe 35 du magasin 31, sous l'action duquel l'organe de poussée 32 est poussé le long de l'axe 35 du magasin vers l'ouverture de passage de tampon.

Le doigt 33 de poussée de la bande de tampons 1 est pourvu d'un ergot 36 destiné à solidariser en translation le long de l'axe 35, de façon détachable, l'organe de poussée 32 et la bande de tampons 1 comme cela sera précisé plus loin.

La bande de tampons 1 comprend une pluralité de bagues 2 de réception de tampon 5, en l'espèce dix bagues, reliées entre elles, le long de l'axe longitudinal 3 de la bande 1, par de fragiles cloisons de liaison 4 destinées à être sectionnées. Les bagues 2 sont chacune destinées à serrer un tampon 5 et à maintenir l'axe de ce tampon 5 perpendiculaire à l'axe longitudinal 3 de la bande 1.

Chaque bague 2 de réception de tampon 5 présente une forme générale tubulaire et comprend deux colliers de serrage 6, 7, postérieur et antérieur, reliés l'un à l'autre par deux nervures 8, 9 parallèles à l'axe de la bague. L'un des deux colliers de serrage, le collier antérieur 7, est prolongé à l'avant le long de l'axe de la bague, par une portion 10 de jupe de positionnement latéral. Les diamètres intérieur et extérieur de la bague 2 sont respectivement égaux au diamètre de la tige de tampon 5 et à l'alésage du guide-tampon 24.

L'une des bagues d'extrémité 11 de la bande 1, la bague de queue, est solidaire, par l'intermédiaire d'une fragile cloison de liaison destinée à être sectionnée, d'un organe de maintien et de guidage 13 destiné à maintenir et guider parfaitement le tampon 5 jusqu'à sa propulsion, sans risque qu'il ne se mette de travers.

L'organe de maintien et de guidage 13 est constitué d'une chape de réception du doigt de poussée 33 de l'organe de poussée 32 du chargeur 31. La chape de réception du doigt de poussée 33 présente la forme d'une mâchoire de préhension du doigt de poussée 33 du chargeur 30 comportant deux branches 14, 15 en U dont l'une 14 ménage une fenêtre 37 de réception de l'ergot 36 du doigt de poussée 33.

L'organe de maintien et de guidage 13 est en outre pourvu d'une béquille anti-mise à feu 16 prolongeant la chape de réception du doigt de poussée perpendiculairement à l'axe longitudinal 3 de la bande de bagues 1, du côté antérieur de la bande 1 prolongé par les portions 10 de jupe de positionnement. La chape de réception pourvue de sa béquille anti-mise à feu 16 présente une largeur totale, perpendiculairement à l'axe longitudinal 3 de la bande de bagues 1, sensiblement égale à la longueur axiale F de la lumière d'approvisionnement 28 du guide-tampon 24. La béquille anti-mise à feu 16 est ainsi destinée, après introduction dans la lumière 28 d'approvisionnement de tampon, à limiter la course du canon 22 de l'appareil 20 comme cela sera explicité par la suite.

Les tampons 5, introduits dans les bagues de réception de la bande par le côté postérieur de la bande dépassent, du côté antérieur de la bande, par leur partie d'extrémité pointue 17, d'une longueur donnée 1.

L'utilisation de la bande de tampons 1 pour le scellement de tampons 5 à l'aide de l'appareil de scellement 20 va maintenant être décrit.

Pour charger l'appareil de scellement 20 en tampons, la bande de tampons 1 est introduite dans le magasin 31 de réception de tampons du chargeur 30, de façon à ce que les axes des tampons 5 s'étendent parallèlement à l'axe 29 du guide-tampon 24.

Le doigt de poussée 33 est introduit dans sa chape de réception 13 de la bande de tampons 1, l'ergot 36 du doigt de poussée 33 étant encliqueté dans la fenêtre 37 de la chape de réception 13 de façon à solidariser de façon détachable, en translation le long de l'axe longitudinal 35 du magasin 31, le doigt de poussée 33 et la bande de tampons 1.

Sous la poussée du ressort de poussée, la bande de tampons 1 est alors poussée le long de l'axe longitudinal 35 du magasin vers le guide-tampon 24, jusqu'à ce que le tampon de tête, et sa bague de tête 12, de l'extrémité de la bande 1 opposée à l'extrémité pourvue de la bague de queue 11 soient introduits dans le guide-tampon 24 par sa fenêtre d'approvisionnement 28. Le maintien correct du tampon et de sa bague 12, avec l'axe du tampon confondu avec celui 29 du guide-tampon 24, est assuré par la bague de réception adjacente.

L'extrémité libre avant du guide-tampon 24 est ensuite mise en appui contre une surface d'appui 40, ici une paroi, et l'appareil de scellement 20 est légèrement poussé contre la paroi 40 de façon à faire coulisser vers l'arrière le guide-tampon 24 et le canon 23 par rapport au chargeur de tampons 30.

Lors du coulissement vers l'arrière du guide-tampon 24, la lumière d'approvisionnement 28 du guide-tampon 24 se décale vers l'arrière par rapport à l'ouverture de passage de tampons du magasin d'alimentation 31.

La longueur axiale de coulissement vers l'arrière du guide-tampon 24 est telle que le bord avant 28' de la lumière d'approvisionnement 28 se trouve, en fin de course, sensiblement dans le plan s'étendant entre les colliers antérieurs 7 de la bande de bagues 2 et les portions 10 de jupe de positionnement latéral.

Après mise en appui de l'appareil de scellement 20, la portion de jupe de la bague 12 du tampon de tête est alors en contact avec la paroi intérieure du guide-tampon 24, à proximité du bord avant 28'. La portion de jupe assure ainsi le positionnement latéral et le maintien correct du tampon de tête et de sa bague 12 dans le guide-tampon 24, avec l'axe du tampon 5 confondu avec celui 29 du guide-tampon 24, sans risque que le tampon ne se mette de travers jusqu'à sa propulsion, pour une bonne qualité des scellements.

Pour sceller le tampon de tête chargé dans le guide-tampon 24, l'utilisateur appuie alors sur la gâchette 27 de l'appareil de scellement 20 de façon à déclencher la mise à feu des charges de poudre et à propulser la masselotte d'entraînement 21 qui vient frapper le tampon de tête en le propulsant vers l'avant. Sous la frappe de la masselotte, la cloison 4 reliant le tampon de tête et le tampon adjacent est sectionnée, la bague 2 du tampon étant détruite lors du scellement dans la paroi.

Après le tir, l'utilisateur décolle l'appareil de scellement 20 de la surface d'appui et le guide-tampon 24 coulisse à nouveau vers l'avant jusqu'à sa position initiale de repos, sous l'action des ressorts de rappel 34.

Pour chacun des tirs suivants de tampon, on réitère l'opération qui vient d'être décrite, le ressort de poussée du chargeur 30 poussant après chaque tir la bande de tampons 1 d'un pas de bague et de cloison de liaison.

On soulignera que le guidage, et surtout le maintien correct dans le guide-tampon 24, du tampon de queue et de sa bague 11 sont parfaitement assurés par l'organe de maintien et de guidage 13, le tampon de queue ne risquant pas de se mettre de travers jusqu'à sa propulsion.

Après avoir tiré le dernier tampon de la bande 1, la béquille anti-mise à feu 16 est introduite dans la lumière 28 d'approvisionnement de tampon sous la poussée du ressort de poussée et limite ainsi la course du guide-tampon 24 et du canon 22 de l'appareil 20 en empêchant la mise à feu.

Après usage du dernier tampon de la bande, et de sa bague 11, l'utilisateur ouvre le chargeur par sa porte d'éjection et tire l'organe de poussée 32, toujours solidaire en translation de l'organe de maintien et de guidage 13,en sens inverse du sens de poussée, jusqu'à ce que l'organe de maintien et de guidage 13, en fin d'ouverture du chargeur 30, vienne buter contre l'ergot d'éjection 38 du chargeur 30 en provoquant le déclipsage du doigt de poussée 36 et donc l'éjection de l'organe de maintien et de guidage 13.

Dans la description qui vient d'être faite, l'organe anti-mise à feu est une béquille 16 solidaire de l'organe de maintien et de guidage 13 de la bande 1 de bagues de réception de tampon 5. On pourait également envisager un organe anti-mise à feu prolongeant le doigt de poussée du chargeur.

On soulignera que l'on pourrait utiliser des tampons plus grands, en remplaçant le guide-tampon 24 par un nouveau guide-tampon avec une fenêtre d'approvisionnement de longueur axiale F' plus importante que celle F du guide-tampon 24 décrit ci-dessus, et en conservant le même appareil de scellement 20 avec la même course du guide-tampon. Il suffirait, dans ce cas, d'introduire les tampons dans les bagues de réception en laissant dépasser les parties d'extrémité pointue des tampons de la bande d'une longueur 1 identique à celle de la bande de tampons précédemment décrite.

Enfin, à la place de l'ergot d'éjection 38 du chargeur 30, il pourrait être prévu un ergot d'éjection faisant saillie de l'organe de maintien et de guidage. Dans ce cas, le chargeur 30 pourrait comprendre une butée d'éjection destinée à coopérer avec l'ergot d'éjection pour l'éjection de l'organe de maintien et de guidage en fin d'ouverture du chargeur.

## Revendications

1. Ensemble d'un chargeur (30) d'appareil de scellement (20) pourvu d'un organe de poussée (32) de bagues (2) de réception de tampons de scellement (5) et d'une bande (1) desdites bagues (2) pourvue d'un organe de maintien et de guidage (13), **caractérisé par le fait que** ledit organe de maintien et de guidage (13) est agencé pour être monté solidaire en translation de façon détachable sur l'organe de poussée (32).

2. Ensemble selon la revendication 1 dont l'organe de poussée comprend un doigt (33) et ledit organe (13) de la bande de bagues est constitué d'une chape de réception du doigt de poussée (33).

3. Ensemble selon la revendication 2 dont le doigt de poussée (33) comprend un ergot (36) et la chape une fenêtre (37) de réception dudit ergot.

4. Ensemble d'un chargeur (30) d'appareil de scellement (20) et d'une bande (1) de bagues (2) de réception de tampon de scellement (5) pourvue d'un organe de maintien et de guidage (13), selon l'une des revendications 1 à 3, dans lequel il est prévu une saillie (38), sur l'une des deux pièces, destinée à coopérer avec des moyens de butée, sur l'autre pièce, pour l'éjection de l'organe de maintien et de guidage (13) en fin d'ouverture du chargeur (30).

5. Bande (1) de bagues (2) de réception de tampon de scellement (5) reliées entre elles, pour chargeur (30) d'appareil de scellement (20), dont l'une (11) des bagues d'extrémité de la bande (1) est solidaire d'un organe de maintien et de guidage (13), **caractérisée par le fait que** l'organe de maintien et de guidage (13) est constitué d'une chape pour la réception d'un doigt de poussée (33) du chargeur (30) et dont une branche comprend une fenêtre (37) permettant la réception d'un ergot du doigt de poussée.

6. Bande de bagues de réception de tampon de scellement selon la revendication 5, dans laquelle l'organe de maintien et de guidage (13) est solidaire d'un organe anti-mise à feu (16), empêchant toute mise à feu après usage de la dernière bague (11) de tampon.

7. Bande de bagues de réception de tampon de scellement selon la revendication 6, dans laquelle l'organe anti-mise à feu (16) est constitué d'une béquille agencée pour, après introduction dans une lumière (28) d'approvisionnement de tampon (5), limiter la course du canon (22) de l'appareil (20).

8. Bande de bagues de réception de tampon de scellement selon l'une des revendications 5 à 7, dans laquelle les bagues (2) de réception de tampon (5) sont prolongées par une portion (10) de jupe de positionnement latéral des bagues (2), pour assurer la qualité des scellements.

## Patentansprüche

1. Anordnung aus einer Ladevorrichtung (30) für ein Setzgerät (20), das mit einem Schubglied (32) für Buchsen (2) zur Aufnahme von Befestigungselementen (5) versehen ist, und einem Streifen (1) der Buchsen (2), der mit einem Halte- und Führungsglied (13) versehen ist, **dadurch gekennzeichnet, dass** das Halte- und Führungsglied (13) so angeordnet ist, dass es auf lösbare Weise translationsfest an dem Schubglied (32) angebracht werden kann.

2. Anordnung nach Anspruch 1, bei der das Schubglied einen Finger (33) umfasst und das Glied (13) des Buchsenstreifens aus einem Bügel zur Aufnahme des Schubfingers (33) besteht.

3. Anordnung nach Anspruch 2, bei der der Schubfinger (33) einen Zapfen (36) und der Bügel ein Fenster (37) zur Aufnahme des Zapfens umfasst.

4. Anordnung aus einer Ladevorrichtung (30) für ein Setzgerät (20) und einem Streifen (1) für Buchsen (2) zur Aufnahme von Befestigungselementen (5), der mit einem Halte- und Führungsglied (13), nach einem der Ansprüche 1 bis 3 versehen ist, bei dem ein Vorsprung (38) an einem der beiden Teile vorgesehen ist, der mit Anschlagmitteln am anderen Teil zusammenwirken soll, um das Halte- und Führungsglied (13) am Ende des Öffnens der Ladevorrichtung (30) auszustoßen.

5. Streifen (1) von miteinander verbundenen Buchsen (2) zur Aufnahme von Befestigungselementen (5) für eine Ladevorrichtung (30) für ein Setzgerät (20), wobei eine (11) der Endbuchsen des Streifens (1) fest mit einem Halte- und Führungsglied (13) verbunden ist, **dadurch gekennzeichnet, dass** das Halte- und Führungsglied (13) aus einem Bügel zur Aufnahme eines Schubfingers (33) der Ladevorrichtung (30) besteht, von dem ein Zweig ein Fenster (37) umfasst, das die Aufnahme eines Zapfens des Schubfingers gestattet.

6. Streifen von Buchsen zur Aufnahme von Befestigungselementen nach Anspruch 5, bei dem das Halte- und Führungsglied (13) fest mit einem Zündungsschutzglied (16) verbunden ist, das jegliche Zündung nach Verwendung der letzten Elementbuchse (11) verhindert.

7. Streifen von Buchsen zur Aufnahme von Befestigungselementen nach Anspruch 6, bei dem das Zündungsschutzglied (16) aus einer Stütze besteht, die so angeordnet ist, dass sie nach Einführung in einen Schlitz (28) zur Zuführung eines Elements (5) den Hub der Kanone (22) des Geräts (20) begrenzt.

8. Streifen von Buchsen zur Aufnahme von Befestigungselementen nach einem der Ansprüche 5 bis 7, bei dem die Buchsen (2) zur Aufnahme von Elementen (5) durch einen Schürzenteil (10) zur seitlichen Positionierung der Buchsen (2) verlängert sind, um die Qualität des Setzens zu gewährleisten.

## Claims

1. Assembly of a magazine (30) of a fastening apparatus (20) provided with an organ (32) for thrusting rings (2) for receiving fasteners (5) and of a strip (1) of said rings (2) provided with a support and guiding organ (13), **characterized in that** said support and guiding organ (13) is arranged for being loosably mounted fast in translation on the thrusting organ (32).

2. Assembly according to claim 1, whose thrusting organ comprises a finger (33) and said organ (13) of the strip of rings is constituted of a strap for receiving the thrusting finger (33).

3. Assembly according to claim 2, whose thrusting finger (33) comprises a lug (36) and the strap, a window (37) for receiving said lug.

4. Assembly of a magazine (30) of a fastening apparatus (20) and of a strip (1) of rings (2) for receiving a fastener (5) provided with a support and guiding organ (13), according to one of claims 1 to 3, wherein a profusion (38) is provided on one of the two pieces, intended to cooperate with stop means, on the other piece, for the ejection of the support and guiding means (13) at the end of the opening of the magazine (30).

5. Strip (1) of rings (2) for receiving fasteners (5) connected to each other, for magazine (30) of a fastening apparatus (20), one (11) of the end rings of the strip (1) being fast with a support and guiding organ (13) **characterized in that** the support and guiding organ (13) is constituted of a strap for the reception of a finger (33) for thrusting the magazine (30) and of which a branch comprises a window (37) enabling the reception of a lug of the thrust finger.

6. Strip of receiving rings for fasteners according to claim 5, wherein the support and guiding device (13) is fast with an anti-ignition device (16) preventing any ignition after the last fastener ring (11) has been used.

7. Strip of receiving rings for fasteners according to claim 6, wherein the anti-ignition device (16) is constituted of a rod arranged to limit the stroke of the barrel (22) of the apparatus (20) after introduction into a window (28) for providing fasteners (5).

8. Strip of receiving rings for fasteners according to one of claims 5 to 7, wherein the rings (2) for receiving the fasteners (5) are extended by a portion (10) of lateral positioning skirt on the rings (2) to ensure the quality of sealing.
